# EUROPEAN PATENT APPLICATION

(11) **EP 4 477 091 A1**
(43) Date of publication of application: **18.12.2024**
(21) Application number: 23752734.6
(22) Date of filing: 31.01.2023
(51) Int. Cl.: A23L 7/157

(54) **BREAD CRUMB COMPOSITION FOR FRIED FOOD**

(30) Priority: 08.02.2022 JP 2022018269
(71) Applicant: Nisshin Seifun Welna Inc., Tokyo 101-8441 (JP)
(72) Inventor: TAKASU, Ryosuke, Fujimino-shi, Saitama 356-8511 (JP); SHIBAMOTO, Noriyuki, Fujimino-shi, Saitama 356-8511 (JP); KOJIMA, Kazuko, Fujimino-shi, Saitama 356-8511 (JP); NAKAMURA, Kenji, Fujimino-shi, Saitama 356-8511 (JP); FUJIBE, Mitsunori, Tokyo 103-8544 (JP)
(74) Representative: Forstmeyer, Dietmar
(86) International application number: PCT/JP2023/002998
(87) International publication number: WO 2023/153269

(57) **Abstract**

A breading composition for fried food containing breadcrumbs prepared from bread dough ingredients including a farinaceous flour. The farinaceous flour contains 2.5 to 30 mass% of oxidized starch and/or acid-treated starch. The bread dough ingredients preferably further include (A) crosslinked starch in an amount of 5 to 25 mass% relative to the farinaceous flour and/or (B) pregelatinized starch and/or pregelatinized cereal flour in an amount of 1 to 10 mass% relative to the farinaceous flour. The bread dough ingredients preferably further include at least one protein foodstuff selected from wheat protein, legume protein, milk protein, and egg powder in an amount in terms of protein of 0.5 to 5 parts by mass per 100 parts by mass of the sum of the farinaceous flour and the protein foodstuff.

## Description

### Technical Field

The present invention relates to a breading composition for fried food prepared using oxidized starch or acid-treated starch.

Breadcrumbs are a processed food product used for cooking, made by grinding bread and, if necessary, drying the ground bread. They are primarily used as a coating material of fried foods. For example, breaded fried foods, a type of breadcrumbs-containing foods, are usually prepared by dusting a food substrate with wheat flour, battering the dusted substrate with liquid egg or batter, coating (breading) the battered substrate with breadcrumbs, and frying the breaded substrate.

Patent literature 1 listed below discloses a breadcrumb composition comprising 100 parts by mass of dried breadcrumbs, 4 to 50 parts by mass of pregelatinized starch and/or protein powder, and 0.2 to 6 parts of a thickening polysaccharide. Patent literature 1 describes that the breadcrumb composition can easily and securely adhere directly to food items and that the food items breaded with the breadcrumb composition is prevented from warping and uneven browning of the coating, even when fried with a small amount of oil.

Patent literature 2 discloses a breadcrumb product having an oil absorption of 6.8% or less, a bulk density after frying of 0.37 g/cm³ or less, and a compressive elastic modulus of 30 to 60 N, in which the individual breadcrumbs are generally spindle-shaped. Patent literature 2 describes that at least wheat flour and distarch phosphate are used as ingredients of bread dough and that the distarch phosphate is used in an amount of 10 to 30 mass% based on the sum of wheat flour and distarch phosphate. The breadcrumb product is described as absorbing a reduced amount of oil during deep-frying and providing a crisp and crunchy texture to breaded fried foods.

### Citation List

### Patent Literature

Patent literature 1: JP 2012-039913A
Patent literature 2: JP 2017-038529A

### Summary of Invention

Preferred breadcrumbs provide a crispy texture and a good mouthfeel with no crumbliness when fried. However, conventional breadcrumbs have the problem that the texture of breadcrumbs deteriorates with time after being fried, losing their crispiness and giving rise to a dry and crumbly texture. Deterioration of breadcrumb texture is liable to occur particularly when a breaded fried food is kept refrigerated or frozen or reheated in a microwave oven.

The breadcrumbs used in patent literature 1 are produced in a usual manner from common ingredients, such as wheat flour, yeast, sugar, salt, and fat or oil, and are not characteristic in themselves. Patent literature 2 is characterized by the use of distarch phosphate, taking note of efficient oil drainage and crunchy texture, but it does not consider how to suppress the crumbly texture while retaining the crispness over time after frying especially when a fried food is reheated in a microwave oven after refrigeration or freezing.

Accordingly, an object of the present invention is to eliminate the problems associated with the conventional techniques.

As a result of intensive study, the inventors have found that breadcrumbs prepared from bread dough ingredients including a specific amount of oxidized starch or acid-treated starch provide, upon being fried, a superior coating that retains a crispy texture with little crumbliness even after storage at room temperature or after microwave heating following cold or frozen storage.

On the basis of the above finding, the present invention provides a breading composition for fried food containing breadcrumbs prepared from bread dough ingredients including a farinaceous flour containing 2.5 to 30% by mass of oxidized starch and/or acid-treated starch.

### Description of Embodiments

The breading composition for fried food, hereinafter simply referred to as the breading composition, according to the present invention contains breadcrumbs. The breadcrumbs are prepared using as a bread dough ingredient a farinaceous flour containing 2.5 to 30 mass% of oxidized starch or acid-treated starch. In the present invention, the oxidized or acid-treated starch is not added to breadcrumbs as an external additive but used as a bread dough ingredient for making breadcrumbs, resulting in the provision of fried breaded coatings including the breadcrumbs with over all crispness.

The oxidized starch is starch that has undergone oxidation treatment with an oxidizer. The oxidation treatment includes oxidation of the carboxyl moiety of the hydroxy group of the starch molecules. The oxidized starch may be that which has undergone a modification process other than the oxidation treatment, such as acetylation and pregelatinization. The starch to be oxidized is not limited and includes potato starch, tapioca starch, sweet potato starch, corn starch, waxy corn starch, wheat starch, and rice starch. From the standpoint of general versatility, tapioca starch, potato starch, and corn starch are preferred. Oxidized starch is produced by treating native starch with an oxidizer, such as sodium hypochlorite or hydrogen peroxide, in a conventional manner. Commercially available oxidized starch products may be utilized. It is preferred to use an oxidized starch having a viscosity in the range of from 0 to 1000 Pa·s, more preferably from 50 to 250 Pa·s, in a 10 mass% aqueous solution at 25°C in order to obtain a high effectiveness in minimizing the texture deterioration after storage at room temperature or cold or frozen storage or after the subsequent microwave heating. Viscosity is measured using a Brookfield viscometer (TV-25, Toki Sangyo Co., Ltd.) equipped with a rotor M3 after the aqueous solution prepared by dissolving 10 parts by mass of starch in 90 parts by mass of 80°C water is allowed to cool spontaneously to 25°C. The measured value taken 1 minute after the start of rotation of the rotor at a speed of 12 rpm can be used.

The acid-treated starch is starch that has been obtained by treating starch with an acid, such as hydrochloric acid or sulfuric acid. The starch to be acid-treated include those recited as examples of the starch to be acid-treated. Waxy corn starch, corn starch, and potato starch are preferred for their general versatility. It is preferred to use an acid-treated starch having a viscosity of 0 to 1000 Pa·s, more preferably 50 to 250 Pa·s, in a 10 mass% aqueous solution at 25°C in order to obtain a high effectiveness in minimizing the texture deterioration after storage at room temperature or cold or frozen storage or after the subsequent microwave heating. The viscosity is determined in the same manner as described above.

In the present invention, the content of the oxidized starch and/or acid-treated starch in the farinaceous flour, which constitutes bread dough ingredients from which the breadcrumbs are made, is 2.5 to 30 mass%. If the content of the oxidized starch and/or acid-treated starch in the farinaceous flour making up the bread dough ingredients is less than 2.5 mass%, the effect in maintaining the initial crispy texture and minimizing crumbliness is insufficient either after storage at room temperature or after microwave heating after cold or frozen storage. If the content of the oxidized starch and/or acid-treated starch is more than 30 mass%, the effect is insufficient particularly on the control of crumbliness after microwave heating following cold storage and on the crispness retention and the control of crumbliness after microwave heating following frozen storage. From these viewpoints, the content of the oxidized starch and/or acid-treated starch in the farinaceous flour as a bread dough ingredient is preferably 5 mass% or higher, more preferably 10 mass% or higher, preferably 25 mass% or lower, more preferably 20 mass% or lower, specifically preferably 5 to 25 mass%, and specifically more preferably 10 to 20 mass%.

When the farinaceous flour contains only one of oxidized starch and acid-treated starch, the term "content of oxidized starch and/or acid-treated starch" means the content of one of them. When the farinaceous flour contains both oxidized starch and acid-treated starch, the term indicates the total content of oxidized starch and acid-treated starch.

As used herein, the term "farinaceous flour" includes both cereal flours and starches. The term "starch" includes both modified starch and native starch. The term "cereal flour" includes modified cereal flours, such as pregelatinized flours. Examples of non-pregelatinized cereal flours will be given later.

The farinaceous flour that constitutes bread dough ingredients preferably contains crosslinked starch in addition to the oxidized starch and/or acid-treated starch.

The crosslinked starch includes distarch phosphate and distarch adipate, which are obtained by introducing a phosphate group or an adipate group to the hydroxy group of the starting starch to induce intramolecular or intermolecular crosslinking. The crosslinked starch includes starch derivatives obtained by other modification processes in addition to crosslinking, such as acetylated distarch phosphate, hydroxypropyl distarch phosphate, phosphated distarch phosphate, and acetylated distarch adipate. The starting starches include those recited above as examples of the starches to be oxidized. Preferred of them are tapioca starch, waxy corn starch, and wheat starch in terms of general versatility. The crosslinked starch is preferably prepared from starch that has not undergone oxidation, acid-treatment, or pregelatinization. The crosslinked starch can be prepared by treating the starting starch with a phosphorylating agent, such as sodium trimetaphosphate or phosphorus oxychloride, or an adipic acid agent, such as adipic anhydride. A commercially available crosslinked starch may be used. Particularly preferred crosslinked starch is distarch phosphate in order to achieve further improved effects in maintaining the crispy texture after room temperature storage and after microwave heating following cold or frozen storage.

When the farinaceous flour as an ingredient of bread dough contains 5 mass% or more of the crosslinked starch, the retention of the crispness after room temperature storage or after microwave heating following cold or frozen storage is improved, and the effect on the control of crumbliness may be achieved to a certain extent. When the farinaceous flour contains 25 mass% or less of the crosslinked starch, the advantage of reduced crumbliness and nice crispness can be achieved. From these points of view, it is preferred for the farinaceous flour to contain 5 to 25 mass% of the crosslinked starch in terms of achieving further enhanced effects on the retention of crispness after room temperature storage, after cold or frozen storage, and after microwave heating. More preferably, the crosslinked starch content of the farinaceous flour is 7.5 mass% or higher, even more preferably 10 mass% or higher, 20 mass% or lower, even more preferably 15 mass% or lower, specifically 7.5 to 20 mass%, and specifically even more preferably 10 to 15 mass%.

In order to ensure the effects of the combined use of the crosslinked starch with the oxidized starch and/or acid-treated starch in controlling texture deterioration, the amount of the crosslinked starch, if used, is preferably 30 parts by mass of more, more preferably 50 to 200 parts by mass, even more preferably 75 to 150 parts by mass, per 100 parts by mass of the oxidized starch and/or acid-treated starch.

In the present invention, it is preferred for the farinaceous flour as an ingredient of bread dough to contain not only the oxidized starch and/or acid-treated starch but also pregelatinized starch and/or pregelatinized cereal flour, particularly a combination of the crosslinked starch and pregelatinized starch and/or pregelatinized cereal flour.

Examples of the pregelatinized starch include pregelatinized tapioca starch, pregelatinized potato starch, pregelatinized wheat flour, pregelatinized rice starch, pregelatinized corn starch, and those pregelatinized starches that have been further modified (e.g., acetylated, hydroxypropylated, or etherified). These pregelatinized starches may be used either individually or in combination of two or more thereof. Examples of the pregelatinized cereal flour include pregelatinized wheat flour and pregelatinized rice flour. These pregelatinized cereal flours may be used either alone or in combination thereof. It is preferred that the pregelatinized starch and/or pregelatinized cereal flour not have undergone oxidation or acid treatment or not have been crosslinked. The pregelatinized starch and/or pregelatinized cereal flour for use in the present invention is preferably the pregelatinized starch. Pregelatinized starch derived from corn starch, wheat starch, or tapioca starch is preferred for their general versatility.

Incorporation of 1 mass% or more of the pregelatinized starch and/or pregelatinized cereal flour in the farinaceous flour is effective in improving retention of the crispness and in reducing crumbliness after room temperature storage, after cold or frozen storage, and after microwave heating. When the content of the pregelatinized starch and/or pregelatinized cereal flour in the farinaceous flour is 10 mass% or lower, the reduction in crispness after room temperature storage and after microwave heating following cold or frozen storage is effectively prevented, and a high effectiveness in controlling crumbliness is obtained. That is, it is preferred that the farinaceous flour contain 1 to 10 mass% of the pregelatinized starch and/or pregelatinized cereal flour in order to further enhance the effect on the control of crumbliness resulting after room temperature storage, after cold or frozen storage, and after microwave heating of fried breadcrumbs.

When the farinaceous flour contains either one of pregelatinized starch and pregelatinized cereal flour, the term "content of the pregelatinized starch and/or pregelatinized cereal flour" refers to the content of one of them. When the farinaceous flour contains both pregelatinized starch and pregelatinized cereal flour, the term indicates the total content of the pregelatinized starch and the pregelatinized cereal flour.

The content of the pregelatinized starch and/or pregelatinized cereal flour in the farinaceous flour is more preferably 2.5 mass% or higher, even more preferably 3.5 mass% or higher, preferably 8 mass% or lower, even more preferably 6.5 mass% or lower, and specifically more preferably 2 to 8 mass%, specifically even more preferably 3.5 to 6.5 mass%.

In order to ensure the effects of the combined use of the pregelatinized starch and/or pregelatinized cereal flour with the oxidized starch and/or acid-treated starch in reducing texture deterioration, the amount of the pregelatinized starch and/or pregelatinized cereal flour, if used, is preferably 5 parts by mass of more, more preferably 10 to 75 parts by mass, even more preferably 25 to 50 parts by mass, per 100 parts by mass of the oxidized starch and/or acid-treated starch.

The farinaceous flour as a bread dough ingredient preferably contains a cereal flour. The cereal flour includes non-pregelatinized cereal flour. Examples of the non-pregelatinized cereal flour include wheat flour, bark flour, rye flour, rice flour, buckwheat flour, soybean flour, and corn flour, with wheat flour being preferred in terms of eating quality. The content of the non-pregelatinized cereal flour in the farinaceous flour is preferably 98 mass% or lower, more preferably 50 to 90 mass%, in order to effectively prevent reduction in crispness and effectively minimize the crumbliness after room temperature storage and after microwave heating following cold or frozen storage. The most preferred content is 60 to 80 mass%.

When the farinaceous flour as a bread dough ingredient contains the non-pregelatinized cereal flour, the amount of the oxidized starch and/or acid-treated starch to be used is preferably 7.5 to 30 parts by mass, more preferably 15 to 25 parts by mass, per 100 parts by mass of the non-pregelatinized cereal flour in order to effectively prevent reduction in crispness and effectively minimize crumbliness after room temperature storage and after microwave heating following cold or frozen storage.

From the same viewpoint, the amount of the crosslinked starch is preferably 10 to 35 parts by mass, more preferably 15 to 30 parts by mass, per 100 parts by mass of the non-pregelatinized cereal flour.

From the same viewpoint, the amount of the pregelatinized starch and/or pregelatinized cereal flour is preferably 2.5 to 12.5 parts by mass, more preferably 5 to 10 parts by mass, per 100 parts by mass of the non-pregelatinized cereal flour.

The bread dough ingredients preferably include at least one protein foodstuff selected from wheat protein, legume protein, milk protein, and egg powder in addition to the farinaceous flour in order to further ensure the effects in preventing reduction of crispness and minimizing crumbliness after room temperature storage and after microwave heating following cold or frozen storage.

Examples of the wheat protein include gluten, gliadin, and glutenin. The legume protein includes soybean flour, powdered soy protein (powdered product obtained by extracting and powderizing soy protein), pea protein, and broad bean protein. The milk protein includes skimmed milk powder, whole milk powder, whey protein such as whey protein concentrate (WPC) and whey protein isolate (WPI), casein protein such as micellar casein concentrate (MCC), milk protein concentrate (MPC), and milk protein isolate (MPI). The egg powder includes whole egg powder, yolk powder, and albumen powder.

The protein foodstuff preferably has a protein content of at least 40 mass%, more preferably 50 mass% or higher, in terms of retention of fried coating crispness. Protein foodstuffs with a protein content of 65 to 95 mass% are the most preferred.

While any of wheat protein, legume protein, milk protein, and egg powder is effective as a protein foodstuff, it is particularly preferred to use wheat protein in terms of bread-making properties as well as crispness retention.

In the present invention, the bread dough ingredients preferably include at least one protein foodstuff selected from wheat protein, legume protein, milk protein, and egg powder in an amount in terms of protein of at least 0.5 parts or 5 parts or less, more preferably 0.5 to 5 parts, by mass per 100 parts by mass of the sum of the farinaceous flour and the protein foodstuff. With the protein foodstuff content in an amount in terms of protein of 0.5 to 5 parts by mass, in particular, reduction of crispness after room temperature storage and after microwave heating following cold or frozen storage can be effectively prevented, and a high effectiveness on crumbliness control is also achieved. From these points of view, it is preferred for the bread dough ingredients to include 1 part or more, more preferably 2 parts or more, preferably 4 parts or less, more preferably 3 parts or less, and specifically preferably 1 to 4 parts, specifically more preferably 2 to 3 parts, by mass in terms of protein per 100 parts by mass of the sum of the farinaceous flour and the protein foodstuff.

The bread dough ingredients preferably include an emulsifier so as to further increase the effects in preventing the reduction of crispness and minimizing crumbliness. Examples of useful emulsifier include glycerol fatty acid esters, organic acid monoglycerides (e.g., acetylated monoglycerides, citrated monoglycerides, diacetyl tartaric acid ester of monoglycerides, lactated monoglycerides, and succinylated monoglycerides), polyglycerol fatty acid esters, propylene glycol fatty acid esters, polyglycerol polyricinoleate, sorbitan fatty acid esters, sucrose fatty acid esters, lecithin, enzymatically decomposed lecithin, sterols, sphingolipids, saponins, yucca foam extract, Quillaia extract, powdered bile, sodium caseinate, calcium stearoyl lactylate, sodium stearoyl lactylate, polysorbates, and starch octenylsuccinate or a salt thereof (e.g., sodium starch octenylsuccinate). These emulsifiers can be used either alone or in combination thereof. Glycerol fatty acid esters are preferred among them for the effects described.

In order to obtain the excellent effect of the emulsifier in minimizing reduction of texture after room temperature storage and after microwave heating following cold or frozen storage, the emulsifier is preferably used in an amount of 1 part or higher and 2 parts or lower, specifically 1 to 2 parts, by mass per 100 parts by mass of the sum of the farinaceous flour and the emulsifier. The amount of the emulsifier is more preferably 1.3 parts or higher and 1.7 parts or lower, even more preferably 1.3 to 1.7 parts, by mass per 100 parts by mass of the sum of the farinaceous flour and the emulsifier.

If desired, yeast, sugar, salt, fat or oil, water, and so on are added to the above-described bread dough ingredients to make bread dough. The proportion of the farinaceous flour in the solids content of the bread dough ingredients is preferably 85 mass% or higher, more preferably 90 mass% or higher, even more preferably 95 mass% or higher. As used herein, the term "solids content" refers to the total content of the ingredients other than water, fats, and oils.

While the bread making method using the bread dough is not particularly limited, a baking method and an extrusion cooking method using an extruder (hereinafter "extrusion method") are suitable in terms of retention of coating crispness.

The baking method typically includes an oven baking method and an ohmic baking method (baking by ohmic heating), and either method can be used. The baking is preferably preceded by leavening. Baking temperatures of 150° to 200°C are usually suitable. The dough to be baked preferably has a water content of 50 to 90 parts, more preferably 60 to 80 parts, by mass per 100 parts by mass of the farinaceous flour of the dough. As used herein, the term "water content (of dough)" refers to the total amount of water itself and the water content of an aqueous liquid such as milk and liquid seasonings. This definition equally applies to the amount of water used in the extrusion method.

The extrusion method includes feeding bread dough ingredients, including a powdered material (hereinafter referred to as a mix) and a liquid material, such as an aqueous liquid (e.g., water, milk, and liquid seasoning), into the barrel of an extruder and conveying and compressing the dough along the barrel while heating to cause the dough to expand. The amount of the liquid to be used, suitably water is preferably 20 to 60 parts, more preferably 30 to 50 parts, by mass per 100 parts by mass of the total farinaceous of the bread dough mix.

The throughput rate of the mix in the extruder is not particularly limited but is preferably 5 to 35 kg/h, more preferably 10 to 25 kg/h.

The barrel temperature after the bread dough ingredients, such as the mix and water, are fed into the barrel is preferably 70° to 110°C, more preferably 80° to 100°C. The barrel temperature is the temperature of the jacket around the barrel. With the barrel temperature being in the above range, crispy breadcrumbs with good flavor can be obtained while preventing the dough ingredients from scorching.

The rotational speed of the extruder screw after the dough ingredients are fed into the extruder is preferably 75 to 300 rpm, more preferably 100 to 250 rpm.

The extruder to be used to produce breadcrumbs may be a single-screw extruder or a twin-screw extruder, but a twin-screw extruder is preferred in order to obtain more uniformly expanded breadcrumbs.

The baked bread or extruded bread is ground into breadcrumbs of appropriate sizes. Where needed, drying may precede grinding. The breadcrumbs for use in the present invention may be either fresh or dried. Dried breadcrumbs are preferred in terms of excellent effects.

The baked bread preferably has a specific volume of 3.0 to 5.0 ml/g on a dry basis (db). A specific volume (db) of 3.0 ml/g or more is preferred for crispness, and that of 5.0 ml/g or less is preferred for the crispness retention. The bread specific volume is determined by the method described in Examples given later.

The extruded bread preferably has an expansion ratio, calculated by dividing the diameter (mm) of an extruded product by the inner diameter (mm) of an extrusion die, of 1.2 to 1.8. An expansion ratio of 1.2 or greater is preferred for crispness, 1.8 or smaller is preferred for the crispness retention. The expansion ratio is determined by the method described in Examples. In the case where the extrusion die opening is not circular, the ratio of the maximum dimension of the die opening to the maximum dimension of a cross-section of an extruded product perpendicular to the extrusion direction is taken as the expansion ratio.

The breading composition of the present invention may consist of only the breadcrumbs or contain other ingredients in addition to the breadcrumbs. The other ingredients include farinaceous flours, protein foodstuffs, emulsifiers, baking powder, thickening polysaccharides, fats and oils, and colorings. Any of the examples of the farinaceous flours, protein foodstuffs, and emulsifiers recited above as bread dough ingredients can be used. The proportion of the breadcrumbs prepared from the above-described bread dough ingredients in the breading composition is preferably at least 20 mass%, more preferably 30 mass% or more. The proportion of the sum of the breadcrumbs and the farinaceous flour other than the breadcrumbs in the breading composition is preferably 50 mass% or more, more preferably 65 mass% or more. The amount of the farinaceous flour other than the breadcrumbs is preferably 50 to 150 parts, more preferably 75 to 125 parts, by mass per 100 parts by mass of the breadcrumbs.

The method of using the breading composition of the present invention is not particularly limited. It may be applied directly to a food substrate, such as meat, fish, shellfish, and vegetables, or a food substrate may first be dusted with flour and/or coated with batter before being breaded with the breading composition. The resulting breaded substrate is then deep-fried. The frying temperature and the type and amount of frying oil are selected in a conventional manner.

The inventors have found that a texture enhancing effect not previously achieved can be produced by using a farinaceous flour containing 2.5 to 30 mass% of oxidized starch or acid-treated starch. It is desirable that the characteristic properties of the breading composition of the present invention be clearly described in the claims on the basis of measurements by any means. Nevertheless, the chemical properties and internal structure of fried breadcrumbs involve a complex combination of many factors, which require significantly excessive economic expenditure and time to analyze. Furthermore, there is no known method to measure the crispness or crumbliness of fried breadcrumbs, and establishing a new measurement method also requires significantly excessive economic expenditure and time. Under these circumstances and in view of the need for expeditiousness in patent applications, the applicant claims in claim 1 a breading composition using, as a bread dough ingredient, a farinaceous flour containing 2.5 to 30 mass% of oxidized starch or acid-treated starch.

As described above, at the time of filing of this application, there existed a situation in which it was impossible to specify the characteristics of the breading composition using, as a bread dough ingredient, a farinaceous flour containing 2.5 to 30 mass% of oxidized starch or acid-treated starch.

### Examples

The present invention will now be illustrated with reference to Examples, but it should be understood that the invention is not construed as being limited thereto. Unless otherwise specified, all the parts and percentages are by mass.

### Control Example, Examples 1 to 29, and Comparative Examples 1 to 4

### Preparation of breadcrumbs

Bread was made in accordance with method 1 below.

The resulting bread was ground in a breadcrumb making machine (PT300, from Hakura Seiki Co., Ltd.), and the fraction passing through a 6 mm mesh sieve was collected to obtain fresh breadcrumbs, which were dried in a fluidized bed at 150°C to a moisture content of 14 mass% or lower to obtain dried breadcrumbs.

### Method 1: Making baked bread

One hundred parts of a mix having the composition shown in Tables 2 to 5 was combined with 1.5 parts of dry yeast, 1 part of salt, 2 parts of shortening, and 68 parts of water and mixed at low speed for 2 minutes, at medium speed for 8 minutes, and then at high speed for 5 minutes. The resulting dough was leavened at 27°C and 75% RH for 60 minutes. The leavened dough was divided, left to bench rest for 20 minutes, given a final proof at 38°C and 75% RH for 60 minutes, and baked at 180°C for 50 minutes. The baked bread was retrograded at 5°C for 18 hours.

### Measurement of bread

The specific volume (ml/g, db) of the baked bread after the retrogradation was measured using a laser volume measurement unit AR-01 from Irie Corp. after the bread was maintained at room temperature (25°C) and 60% RH for 60 minutes. The specific volume (db) was calculated by the formula below. The moisture content of the bread was determined by the atmospheric heat drying method (135°C). Specific volume (ml/g) = volume (ml) of bread/mass (g) of bread/(1 - moisture content (%) of bread/100)

### Preparation of batter

A batter mix was provided, consisting of 78.5% of a modified starch (Batter Starch #200N, from Nihon Shokuhin Kako Co., Ltd.), 20% of weak flour (Flour, from Nisshin Flour Milling Inc.), 1% of glycerol monostearate (Excel S-95, from Kao Corporation) as an emulsifier, and 0.5% of guar gum (Guapak, from DSP Gokyo Food & Chemical CO., Ltd.) as a thickening agent. One hundred grams of the batter mix was dissolved in a mixture of 20 g of purified soybean oil and 200 ml of water to prepare batter.

### Preparation of breading mix

A breading mix was prepared from 35% of the dried breadcrumbs prepared above, 30% of weak flour (Flour), 33% of modified starch (Batter starch #200N), 1% of glycerol monostearate (Excel S-95) as an emulsifier, and 1% of baking powder (Baking Powder FS, from Oriental Yeast Co., Ltd.).

### Making fried chicken

Chicken thigh cut pieces each weighing 80 g were marinated, dusted with modified starch (Batter Starch #200), dipped in the batter, and each breaded with the breading mix. The breaded chicken pieces were deep-fried in oil at 175°C for 2 minutes. After a resting time of 1 minute, the once fried chicken pieces were fried again in oil at 175°C for another 2 minutes. Before the sensory test of the resulting fried chicken, alignment was achieved among panel members with respect to evaluation criteria and texture assessment.

### Evaluation

(1) After leaving the fried chicken immediately after frying for 4 hours at room temperature (25°C), 10 panel members ate the fried chicken and rated the texture of the coating on the 5-point scale shown in Table 1. The average ratings by 10 panel members are shown in Tables 2 through 5.
(2) The fried chicken (different from that evaluated in (1) above) immediately after frying was allowed to cool at room temperature (25°C) for 60 minutes and then stored in a refrigerator (5°C) for 24 hours. The fried chicken was removed from the refrigerator and reheated in a microwave oven (600 W) for 180 seconds per piece. The same panel members as in the evaluation (1) ate the reheated fried chicken and rated the texture of the coating on the 5-point scale in Table 1. The average panel member ratings are shown in Tables 2 through 5.
(3) The fried chicken (different from those evaluated in (1) and (2) above) immediately after frying allowed to cool at room temperature (25°C) for 30 minutes to cool and then stored in a freezer (-20°C) for 24 hours. The fried chicken was removed from the refrigerator and reheated in a microwave oven (600 W) for 180 seconds per each piece. The 10 panel members ate the reheated fried chicken and rated the texture of the coating on the 5-point scale of Table 1. The average rating by the panel members is shown in Tables 2 through 5. The fried chicken can be regarded excellent in texture when the ratings for all six items are 3.6 or higher, or when the average of all six ratings is 3.9 or higher.

**Table 1**

| Rating (score) | Crispness | Non-crumbliness |
|---|---|---|
| 5 | Much crispier than control | Much less crumbly than control |
| 4 | Crispier than control | Less crumbly than control |
| 3 | Same as control | Same as control |
| 2 | Soggier and less crispy than control | Crumblier than control, poor mouthfeel |
| 1 | Much soggier than control, no crispness | Much crumblier than control, very poor mouthfeel |

**Table 2**

| | | | Control | Example | | | | | | Comparative Example | | | |
|---|---|---|---|---|---|---|---|---|---|---|---|---|---|
| | | | | 1 | 2 | 3 | 4 | 5 | 6 | 1 | 2 | 3 | 4 |
| Mix | Strong Flour (%) | | 100 | 85 | 85 | 97.5 | 90 | 80 | 70 | 85 | 85 | 99 | 65 |
| | Modified Starch | Modification Process | - | oxidized | acid-treated | oxidized | oxidized | oxidized | oxidized | native | acetylated | oxidized | oxidized |
| | | (%) | - | 15 | 15 | 2.5 | 5 | 25 | 30 | 15 | 15 | 1 | 35 |
| Specific Volume (ml/g) | | | 5.5 | 3.7 | 3.6 | 4.6 | 4.1 | 3.3 | 3.1 | 3.8 | 3.9 | 5.1 | 2.8 |
| Kept at room temp. | | Crispness | 3.0 | 4.5 | 4.4 | 4.0 | 4.2 | 4.3 | 4.1 | 3.1 | 2.7 | 3.4 | 3.8 |
| | | Non-crumbliness | 3.0 | 4.4 | 4.4 | 4.1 | 4.2 | 4.2 | 4.1 | 2.8 | 3.7 | 3.3 | 3.6 |
| Cold Stored and Microwaved | | Crispness | 3.0 | 4.5 | 4.5 | 4.1 | 4.5 | 4.4 | 4.2 | 3.2 | 2.8 | 3.3 | 4.0 |
| | | Non-crumbliness | 3.0 | 4.3 | 4.3 | 4.0 | 4.3 | 4.3 | 4.0 | 2.7 | 3.5 | 3.2 | 3.5 |
| Frozen Stored and Microwaved | | Crispness | 3.0 | 4.3 | 4.3 | 4.1 | 4.2 | 4.3 | 4.2 | 3.0 | 2.9 | 3.6 | 3.5 |
| | | Non-crumbliness | 3.0 | 4.4 | 4.3 | 4.2 | 4.1 | 4.0 | 4.2 | 2.8 | 3.7 | 3.5 | 3.6 |

The modified starches shown in Table 2 were:
Oxidized starch: SP-3 from J-Oil Mills, Inc.; viscosity in 10% aqueous solution at 25°C, 50 to 250 Pa·s; the same applies to those in Tables 3 to 5.
Acid-treated starch: Gelcol R-100 from J-Oil Mills; viscosity in 10% aqueous solution at 25°C, 50 to 250 Pa·s
Native starch: Corn Starch Y-3P, from Sanwa Starch Co., Ltd.
Acetylated starch: Sakura 2, from Matsutani Chemical Industry, Co., Ltd.

**Table 3**

| | | Example | | | | | | | | | |
|---|---|---|---|---|---|---|---|---|---|---|---|
| | | 7 | 8 | 9 | 10 | 11 | 12 | 13 | 14 | 15 | 16 |
| Mix (%) | Strong Flour | 80 | 70 | 60 | 84 | 80 | 75 | 65 | 82.5 | 55 | 84.5 |
| | Oxidized Starch | 15 | 15 | 15 | 15 | 15 | 15 | 15 | 15 | 15 | 15 |
| | Distarch Phosphate* | 5 | 15 | 25 | - | - | - | 15 | 2.5 | 30 | - |
| | Pregelatinized starch** | - | - | - | 1 | 5 | 10 | 5 | - | - | 0.5 |
| Specific Volume (ml/g) | | 3.4 | 3.2 | 3 | 3.9 | 4.4 | 4.7 | 4 | 3.5 | 2.9 | 3.7 |
| Kept at room temp. | Crispness | 4.6 | 4.7 | 4.7 | 4.4 | 4.4 | 4.3 | 4.7 | 3.9 | 4.3 | 3.8 |
| | Non-crumbliness | 4.4 | 4.2 | 4.1 | 4.5 | 4.6 | 4.6 | 4.6 | 4.0 | 3.6 | 3.9 |
| Cold Stored and Microwaved | Crispness | 4.6 | 4.7 | 4.7 | 4.4 | 4.4 | 4.3 | 4.7 | 3.9 | 4.2 | 3.9 |
| | Non-crumbliness | 4.3 | 4.2 | 4.2 | 4.4 | 4.5 | 4.5 | 4.5 | 3.8 | 3.7 | 3.8 |
| Frozen Stored and Microwaved | Crispness | 4.4 | 4.5 | 4.5 | 4.3 | 4.2 | 4.2 | 4.5 | 3.8 | 4.2 | 3.6 |
| | Non-crumbliness | 4.3 | 4.3 | 4.2 | 4.5 | 4.6 | 4.6 | 4.6 | 3.6 | 3.5 | 4.0 |

| | | | | | | | | | | | |
|---|---|---|---|---|---|---|---|---|---|---|---|
| *: Pine Bake CC, from Matsutani Chemical Industry, Co., Ltd. **: Non-GMO Corn Alpha-Y, from Sanwa Starch Co., Ltd. | | | | | | | | | | | |

**Table 4**

| | | Example | | | | | | | |
|---|---|---|---|---|---|---|---|---|---|
| | | 17 | 18 | 19 | 20 | 21 | 22 | 23 | 24 |
| Mix | Strong Flour (% in total farinaceous flour) | 85 | 84 | 85 | 84 | 85 | 84 | 85 | 83 |
| | Oxidized Starch (do.) | 15 | 16 | 15 | 16 | 15 | 16 | 15 | 17 |
| | Total Farinaceous Flour (%) | 96.8 | 95.9 | 96.9 | 94.7 | 99.4 | 93.7 | 99.9 | 90.5 |
| | Protein foodstuff* | wheat protei n | soy protei n | milk protei n | whole egg powde r | wheat protei n | wheat protei n | wheat protei n | wheat protei n |
| | Protein foodstuff (%) | 3.2 | 4.1 | 3.1 | 5.3 | 0.6 | 6.3 | 0.1 | 9.5 |
| | Protein Equivalent (%) | 2.5 | 2.5 | 2.5 | 2.5 | 0.5 | 5 | 0.1 | 7.5 |
| Specific Volume (ml/g) | | 4.2 | 4 | 4.1 | 3.9 | 3.8 | 4.6 | 3.7 | 4.9 |
| Kept at room temp. | Crispness | 4.6 | 4.6 | 4.7 | 4.4 | 4.5 | 4.5 | 3.9 | 3.6 |
| | Non-crumbline ss | 4.6 | 4.4 | 4.3 | 4.6 | 4.5 | 4.5 | 4.2 | 4.1 |
| Cold Stored and Microwave d | Crispness | 4.6 | 4.7 | 4.7 | 4.4 | 4.5 | 4.6 | 3.8 | 3.7 |
| | Non-crumbline ss | 4.5 | 4.4 | 4.3 | 4.4 | 4.4 | 4.3 | 4.0 | 4.0 |
| Frozen Stored and Microwave d | Crispness | 4.5 | 4.6 | 4.7 | 4.2 | 4.4 | 4.5 | 3.7 | 3.6 |
| | Non-crumbline ss | 4.5 | 4.4 | 4.4 | 4.6 | 4.4 | 4.4 | 3.8 | 3.9 |

| | | | | | | | | | |
|---|---|---|---|---|---|---|---|---|---|
| * The protein foodstuffs described in Table 4 were: Wheat protein: Superglue 85H(N), from Nippon Colloid Co., Ltd.; protein content, 79.2% Soy protein: Profit-1000, from FUJI OIL CO., LTD.; protein content, 60.9% Milk protein: MPC 80, from Friesland Campina Domo; protein content, 80.5% Whole egg powder: Dry Whole Egg No. 1, from Kewpie Corp.; protein content, 47.6% | | | | | | | | | |

**Table 5**

| | | Example | | | | |
|---|---|---|---|---|---|---|
| | | 25 | 26 | 27 | 28 | 29 |
| Mix | Strong Flour (% in total farinaceous flour) | 85 | 85 | 85 | 85 | 85 |
| | Oxidized Starch (do.) | 15 | 15 | 15 | 15 | 15 |
| | Total Farinaceous Flour (%) | 99 | 98.5 | 98 | 99.5 | 97.5 |
| | Emulsifier* (%) | 1 | 1.5 | 2 | 0.5 | 2.5 |
| Specific Volume (ml/g) | | 4.2 | 4.3 | 4.4 | 4.1 | 4.5 |
| Kept at room temp. | Crispness | 4.6 | 4.7 | 4.3 | 4.1 | 3.9 |
| | Non-crumbliness | 4.4 | 4.5 | 4.5 | 3.8 | 4.0 |
| Cold Stored and Microwaved | Crispness | 4.5 | 4.7 | 4.4 | 4.0 | 3.8 |
| | Non-crumbliness | 4.4 | 4.6 | 4.4 | 3.9 | 3.9 |
| Frozen Stored and Microwaved | Crispness | 4.3 | 4.5 | 4.2 | 3.9 | 3.9 |
| | Non-crumbliness | 4.5 | 4.6 | 4.5 | 3.8 | 4.1 |

| | | | | | | |
|---|---|---|---|---|---|---|
| *: Excel S-95, from Kao Corp. | | | | | | |

As shown in Tables 2 to 5, the breading compositions of Examples prepared by using, as a bread dough ingredient, a farinaceous flour containing 2.5% to 30% of oxidized starch or acid-treated starch exhibit, when fried, excellent crispy texture and no crumbliness even after standing at room temperature or after microwave heating following cold storage, and after microwave heating following frozen storage as compared with those of Comparative Examples prepared by using, as a bread dough ingredient, a farinaceous flour that does not contain oxidized or acid-treated starch or contains oxidized or acid-treated starch in a ratio outside the above range.

It has also been proved that incorporating crosslinked starch or pregelatinized starch (Table 3), a protein foodstuff (Table 4), or an emulsifier (Table 5) into bread dough in the respective specific ratios effectively improves the texture of the fried breading compositions.

### Control Example 2 and Example 30

Bread was made in accordance with method 2 below.

### Method 2: Making extruded bread

The same mixes as used in Control Example and Example 1 were used. One hundred parts of each mix and 40 parts of water were processed in a twin-screw extruder (Twin-Screw Food Extruder, from The Japan Steel Works, Ltd.) under the following conditions to produce bread of Control Example 2 and Example 30.

### Extrusion conditions:

Powder feed rate: 15 kg/h
Screw speed: 250 rpm
Barrel temperature: 90°C
Nozzle inner diameter: 5 mm

The expansion ratios (diameter of extruded product/ inner diameter of extrusion die) of the bread of Control Example 2 and that of Example 30 were obtained by the method below and were found to be 2.0 and 1.5, respectively.

### Method for determining expansion ratio (diameter of extruded product/ inner diameter of extrusion die)

After the extruded bread was stored at 25°C and 60% RH for 60 minutes, the diameter of the bread was measured with a slide gauge. The diameter (mm) of the extruded product was divided by the inner diameter (5 mm) of the extrusion die to give the expansion ratio.

The resulting bread was processed to produce dried breadcrumbs in the same manner as in Examples 1 to 29 and Comparative Examples 1 to 4. The breadcrumbs of Example 30 were evaluated in the same manner as in Examples 1 to 29 and Comparative Examples 1 to 4, except for using the dried breadcrumbs of Control Example 2, which were prepared from extruded bread, as a control. As a result, the ratings for the six evaluation items were as follows:
Crispness after keeping at room temperature: 4.4
Non-crumbliness after keeping at room temperature: 4.6
Crispness after microwave heating following cold storage: 4.4
Non-crumbliness after microwave heating following cold storage: 4.5
Crispness after microwave heating following frozen storage: 4.3
Non-crumbliness after microwave heating following frozen storage: 4.3

### Industrial Applicability

The breading composition of the present invention provides, when fried, a fried breaded coating that is prevented from deteriorating in texture even after the passage of time from frying and retains its initial crispness with reduced crumbliness.

The breading composition of the present invention retains good crispness with reduced crumbliness even after room temperature storage, cold storage, and frozen storage, especially after microwave heating following room temperature, cold, or frozen storage.

## Claims

1. A breading composition for fried food comprising breadcrumbs prepared from bread dough ingredients comprising a farinaceous flour comprising 2.5 to 30 mass% of oxidized starch and/or acid-treated starch.

2. The breading composition for fried food according to claim 1, wherein the bread dough ingredients further comprise (A) crosslinked starch in an amount of 5 to 25 mass% relative to the farinaceous flour and/or (B) pregelatinized starch and/or pregelatinized cereal flour in an amount of 1 to 10 mass% relative to the farinaceous flour.

3. The breading composition for fried food according to claim 1 or 2, wherein the bread dough ingredients further comprise at least one protein foodstuff selected from wheat protein, legume protein, milk protein, and egg powder in an amount in terms of protein of 0.5 to 5 parts by mass per 100 parts by mass of the sum of the farinaceous flour and the protein foodstuff.

4. The breading composition for fried food according to any one of claims 1 to 3, wherein the bread dough ingredients further comprise an emulsifier in an amount of 1 to 2 parts by mass per 100 parts by mass of the sum of the farinaceous flour and the emulsifier.

5. The breading composition for fried food according to any one of claims 1 to 4, wherein the breadcrumbs comprise those prepared by baking or extrusion cooking the bread dough ingredients and grinding the resulting baked bread or extruded bread.

6. The breading composition for fried food according to claim 5, wherein the baked bread has a specific volume of 3.0 to 5.0 ml/g on a dry basis.

7. The breading composition for fried food according to claim 5, wherein the extruded bread has an expansion ratio of 1.2 to 1.8 as calculated by dividing the diameter of an extruded product by the inner diameter of an extrusion die.

8. A method for producing a breading composition comprising making breadcrumbs from bread dough comprising a farinaceous flour containing 2.5 to 30 mass% of oxidized starch or acid-treated starch.
